# DEMANDE DE BREVET EUROPEEN

(11) **EP 3 624 080 A1**
(43) Date de publication de la demande: **18.03.2020**
(21) Numéro de dépôt: 18194929.8
(22) Date de dépôt: 17.09.2018
(51) Int. Cl.: G08G 1/00, G06F 21/00, G06Q 30/00, G07B 15/04, G07F 7/00, G07F 17/00, H04W 4/00, H04W 64/00

(54) **SYSTEME POUR GERER LA LOCALISATION DE LA MISE A DISPOSITION ET RESTITUTION DE VEHICULES EN PARTAGE ET PROCEDE DE GESTION POUR LA MISE EN OEUVRE DU SYSTEME**

(71) Demandeur: Tracetel S.A., 78320 La Verrière (FR)
(72) Inventeur: EMERY, Jean Marie Michel, 78470 SAINT REMY LES CHEVREUSE (FR); BENAMARA, Raouf, 78610 LE PERRAY EN YVELINES (FR)
(74) Mandataire: Audusseau-Girardeau, Magaly

(57) **Abrégé**

L'invention concerne un système pour gérer la mise à disposition de véhicules (1), notamment électrique, en partage ou la restitution desdites véhicules, ledit système comportant un serveur distant (5) et un dispositif antivol (2), à fixer sur un véhicule (1), ledit dispositif antivol (2) comportant un système de verrouillage (3) du véhicule (1), pour empêcher l'utilisation du véhicule (1), actionnable entre une première position inhibée et une seconde position de verrouillage temporaire, voire une troisième position de verrouillage final, ainsi qu'un module de connectivité (4) comprenant a) un équipement de communication (6), b) un module d'identification (7) d'un usager (10). Le système est remarquable en ce qu'il comporte au moins une balise (8) définissant une zone géographique d'un parc de stationnement pour lesdits véhicules, ladite au moins une balise (8) étant apte à transmettre des ondes radio (90), et en ce que ledit dispositif antivol (2) comporte un récepteur de ces ondes radio (40) en RSSI pour que soit générée une information de position (Ip) du dispositif antivol (2) par rapport à ladite au moins une balise (8).

## Description

L'invention a trait à la gestion de parcs de véhicules en libre-service ou en location longue durée dans lequel un exploitant administre, entretient et surveille une flotte de véhicules.

Elle concerne, par ailleurs, des perfectionnements apportés dans le domaine de la géolocalisation des véhicules de tels parcs.

Les parcs de véhicules en libre-service comportent usuellement des stations fixes comportant des bornes auxquelles les véhicules sont associés : sous justification de droits d'un usager, les véhicules sont pris ou restitués aux bornes des stations.

Ces stations permettent de restituer un véhicule dans des endroits différents de ceux où ils ont été pris, ce qui impose à l'exploitant de veiller à une répartition toujours uniforme des véhicules en stations, par exemple en déplaçant les véhicules des stations toujours en surcharge pour alimenter les stations souvent vides.

Outre cette gestion compliquée et coûteuse des stations fixes, elles présentent des inconvénients à être mise en place : en effet, les bornes auxquelles sont associés les véhicules pour la gestion du parc doivent être soumises à une autorisation administrative, constituent une intrusion visuelle et physique des espaces publics. De plus, elles doivent être alimentées en électricité, ce qui impose des travaux d'implantation conséquents pour les villes.

De tels parcs avec stations comportant des bornes sont, par exemple, décrits dans la demande de brevet FR 2 927 714.

Ces contraintes ont permis d'imaginer de nouveaux systèmes dit « free floating » dans lesquels les véhicules sont stockés dans la ville de manière aléatoire : les véhicules sont toutefois localisés et localisables par les smartphones des usagers, grâce au système GPS notamment.

Néanmoins, ces nouveaux systèmes ont également présenté leurs limites : en effet, certains véhicules sont trop facilement volés ou privatisés (c'est-à-dire que les véhicules sont déclarés rendus alors qu'ils sont stockés dans des lieux privés inaccessibles pour les usagers). De plus, la géolocalisation des véhicules est parfois imprécise et les usagers ont du mal à les trouver.

Ces inconvénients ont conduit à un mécontentement des usagers et des pouvoirs publics ayant accepté l'implantation de tels parcs, ainsi qu'à des dépenses supplémentaires imprévues pour l'exploitant qui doit continuer de tenter de satisfaire les usagers en remplaçant les véhicules volés ou perdus.

L'invention vise à offrir une alternative aux systèmes existants de type « free floating » et propose une solution non intrusive dans les lieux urbains.

Elle propose, à cet effet, un système pour gérer une zone précise de mise à disposition de véhicules en partage ou la restitution de véhicules (éventuellement électriques) en partage, sur un territoire donné, maillé par un nombre d'antennes passerelles assurant la communication entre un serveur distant et un dispositif antivol, à fixer sur un véhicule. Autrement dit, le système assure la gestion de la mise à disposition de véhicule en partage dans une zone géographique définie (périmètre urbain, zone régionale, parcours touristique le long d'un fleuve, ou dans un parc naturel, etc) dont le territoire aura été maillé d'antennes, couvrant/ assurant les communications entre des modules embarqués sur les véhicules mis à la disposition des usagers, et un serveur.

Ledit dispositif antivol comporte :
- un système de verrouillage du véhicule, pour empêcher l'utilisation du véhicule, actionnable entre une première position inhibée suivant laquelle le véhicule n'est pas verrouillé et utilisable, une seconde position de verrouillage temporaire suivant laquelle le véhicule est verrouillé mécaniquement et éventuellement une troisième position de verrouillage final suivant laquelle le véhicule est verrouillé mécaniquement et électriquement,
- un module de connectivité comprenant :
   a) un équipement de communication, apte à communiquer avec ledit serveur distant,
   b) un module d'identification d'un usager qui communique avec ledit équipement de communication.

Le système conforme à l'invention est remarquable en ce qu'il comporte au moins une balise définissant une zone géographique d'un parc de stationnement pour lesdits véhicules, ladite au moins une balise comprenant une batterie et un module de communication, apte à transmettre des ondes radio, et en ce que ledit dispositif antivol comporte :
- un récepteur d'ondes radio, apte à recevoir les ondes radio émises par ladite au moins une balise en RSSI et apte à délivrer, au moins une information d'intensité desdites ondes radio reçues de ladite balise, et
- un module de traitement de ladite information d'intensité, pour générer une information de position du dispositif antivol par rapport à ladite balise émettrice desdites ondes radio,
ledit équipement de communication dudit dispositif antivol étant apte à transmettre audit serveur distant ladite information de position générée et à recevoir, en retour du serveur distant, un signal autorisant ou non la mise à disposition du véhicule ou une restitution dudit véhicule.

Grâce à la présence d'au moins une telle balise (une au moins, mais il peut en y avoir plusieurs) et au dispositif antivol conçu pour communiquer directement avec le serveur, il n'y a plus à prévoir de mobilier urbain sur lequel doivent être attachés les véhicules, pour définir des espaces physiques dans lesquels les véhicules en partage doivent nécessairement être pris ou rapportés : les balises fonctionnant grâce aux batteries peuvent être placées où l'on souhaite (elles peuvent être cachées dans du mobilier urbain déjà présent ou enterrées). Les balises définissent géographiquement cet espace en restant discrètes et le dispositif antivol permet de restituer les véhicules dans les espaces définis par les balises. On redéfinit ainsi la notion de station comme espace de « rangement » des véhicules obligatoire pour éviter que ces véhicules ne soient rendus dans des endroits inaccessibles aux usagers.

De plus, la communication entre l'usager et le véhicule est directe, de même que la communication entre l'usager, le véhicule et le serveur, grâce à une passerelle : l'interface au travers de bornes d'accès au service n'est plus nécessaire ; la transaction est neutre, elle peut être invisible pour l'usager, s'il porte sur lui un identifiant radiofréquence sans contact, il n'y a plus de station avec des bornes qui servent de relais de communication.

Le système conforme à l'invention peut également comporter les caractéristiques suivantes, prises séparément ou en combinaison :
- ledit équipement de communication transmet ladite information de position suivant le protocole de communication permettant la communication, par radio, d'objets à faible consommation électrique et connectés des passerelles, participant ainsi à l'Internet des objets,
   ledit module de communication d'ondes radio de ladite au moins une balise comporte en outre un récepteur d'ondes radio comportant des informations relatives audit dispositif antivol d'un véhicule,
   et ladite au moins une balise comporte un module de traitement logique desdites informations relatives audit dispositif antivol ;
- ledit module de communication de ladite au moins une balise et le récepteur d'ondes radio dudit dispositif antivol fonctionnent suivant la technologie Bluetooth ;
- le dispositif antivol comporte un module GPS ;
- le dispositif antivol comporte deux éléments qui s'assemblent parmi lesquels un premier élément comportant ledit système antivol et un second élément comportant ledit module de connectivité, ledit récepteur d'ondes radio et ledit module de traitement : on peut ainsi adapter le système conforme à l'invention sur des systèmes existants ;
- le système comporte plusieurs véhicules, chacun des véhicules étant équipé d'un dispositif antivol ;
- le système comporte un appareil mobile dudit usager mettant en oeuvre une application mobile usager dédiée audit système, ladite application étant gérée par ledit serveur distant et transmettant des informations d'usager audit usager parmi lesquelles :
   - une information relative à un niveau de batterie du véhicule,
   - une information relative à la position géographique du véhicule,
   - une information sur un état de verrouillage dudit système de verrouillage du véhicule,
   - un historique des trajets réalisés avec ledit véhicule ;
- suivant un mode de réalisation, ladite application comporte un outil d'identification permettant à l'usager de s'identifier sur le dispositif antivol au moyen de son appareil mobile ;
- le système comporte une interface exploitant gérée par ledit serveur distant, ladite interface exploitant délivrant des informations d'exploitant audit exploitant parmi lesquelles :
   - un inventaire de véhicules en partage,
   - des informations propres à chacun des véhicules,
   - une première indication sur au moins un véhicule dont le niveau de batterie est inférieur à un seuil de niveau de batterie prédéterminé,
   - une seconde indication sur au moins un véhicule se trouvant en dehors desdites bornes géographiques dudit parc de stationnement ;
- avantageusement, l'interface exploitant comporte un module de commande du système de verrouillage du véhicule par l'exploitant, ledit module de commande étant apte à déclencher un changement de position du système de verrouillage sur instruction d'un exploitant.

L'invention concerne également un procédé de gestion pour la mise en oeuvre du système qui vient d'être défini.

Le procédé conforme à l'invention est remarquable en ce qu'il comporte les étapes suivantes pour la mise à disposition d'un véhicule :
- identification dudit usager au moyen dudit module d'identification dudit dispositif antivol équipant un véhicule et transmission au serveur distant de l'identification dudit usager par ledit équipement de communication,
- éventuel balayage radio d'une zone géographique prédéterminée autour dudit véhicule, par ledit module de connectivité dudit dispositif antivol, détection éventuelle, par ledit récepteur d'ondes radio, d'un signal radio émis par ladite au moins une balise et
- délivrance éventuelle, par le module de traitement, d'une information de position relative dudit dispositif antivol par rapport à ladite au moins une balise,
- transmission éventuelle de ladite information de position par ledit équipement de communication au serveur distant,
- réception de ladite information d'usager et éventuellement réception de ladite information de position, par ledit serveur distant,
- génération d'un signal d'autorisation de mise à disposition par le serveur distant en direction de l'équipement de communication dudit dispositif antivol,
- réception du signal d'autorisation de mise à disposition par ledit équipement de communication,
- traitement dudit signal d'autorisation de mise à disposition par ledit module de traitement du dispositif antivol,
- déclenchement du passage du système de verrouillage de sa position verrouillée finale à sa position inhibée.

Le procédé conforme à l'invention comporte également les caractéristiques suivantes, pour la restitution finale d'un véhicule :
- actionnement manuel du système de verrouillage du véhicule par l'usager, déclenchant la transmission d'un signal de demande de restitution par ledit équipement de communication audit serveur distant ainsi que le passage du système de verrouillage de sa position inhibée à sa position verrouillée temporaire,
- réception dudit signal de demande de restitution par ledit serveur distant qui identifie alors ledit usager et ledit véhicule,
- balayage radio d'une zone géographique prédéterminée autour dudit véhicule, par ledit module de connectivité dudit dispositif antivol,
- détection, par ledit récepteur d'ondes radio, d'un signal radio émis par ladite au moins une balise,
- délivrance, par le module de traitement, d'une information de position relative audit dispositif antivol par rapport à ladite au moins une balise,
- transmission de ladite information de position par ledit équipement de communication en direction du serveur distant,
- réception de ladite information de position et dudit signal de demande de restitution par ledit serveur distant,
- traitement de ladite information de position par ledit serveur distant et génération d'une information d'état de restitution du véhicule,
- transmission par le serveur distant d'un signal d'autorisation de restitution, en direction de l'équipement de communication dudit dispositif antivol,
- réception du signal d'autorisation de restitution par ledit équipement de communication,
- traitement dudit signal d'autorisation de restitution par ledit module de traitement du dispositif antivol,
- déclenchement du passage du système de verrouillage de sa position verrouillée temporaire à sa position verrouillée finale.

Suivant un mode de réalisation qui sera présenté par la suite, on prévoit également que le procédé conforme à l'invention comporte les étapes suivantes pour la restitution temporaire d'un véhicule :
- actionnement manuel du système de verrouillage du véhicule par l'usager, déclenchant la transmission d'un signal de demande de restitution audit serveur distant ainsi que le passage du système de verrouillage de sa position inhibée à sa position verrouillée temporaire,
- réception dudit signal de demande de restitution par ledit serveur distant qui identifie alors ledit usager et ledit véhicule,
- balayage radio d'une zone géographique prédéterminée autour dudit véhicule, par ledit module de connectivité dudit dispositif antivol,
- constatation par ledit module de connectivité d'une absence de détection d'un signal radio émis par ladite au moins une balise,
- transmission par ledit équipement de communication au serveur distant d'une information d'absence de position définie,
- réception de ladite information d'absence de position définie par ledit serveur distant,
- traitement de ladite information d'absence de position définie par ledit serveur distant et génération d'une information d'état de restitution temporaire du véhicule.

Enfin, le procédé conforme à l'invention prévoit que, si l'usager n'est pas reconnu par le serveur distant, alors le serveur distant commande le maintien du système de verrouillage du véhicule en position de verrouillage final.

Pour pouvoir être exécutée, l'invention est exposée de façon suffisamment claire et complète dans la description suivante qui est, en plus, accompagnée de dessins dans lesquels :
La figure 1 est un schéma illustrant chacun des éléments intervenant dans le système conforme à l'invention, suivant un mode de réalisation décrit par la suite,
La figure 2 est une représentation schématique des trois éléments essentiels au fonctionnement du procédé conforme à l'invention,
La figure 3 est un schéma fonctionnel illustrant schématiquement les actions se produisant lors d'une restitution conforme d'un véhicule,
Et la figure 4 est un schéma fonctionnel illustrant schématiquement les actions se produisant lors d'une restitution non conforme d'un véhicule.

Dans la description qui suit, les termes « inférieur », « supérieur », « haut », « bas » etc... sont éventuellement utilisés en référence aux dessins pour une plus grande facilité de compréhension. Ils ne doivent pas être compris comme étant des limitations de la portée de l'invention.

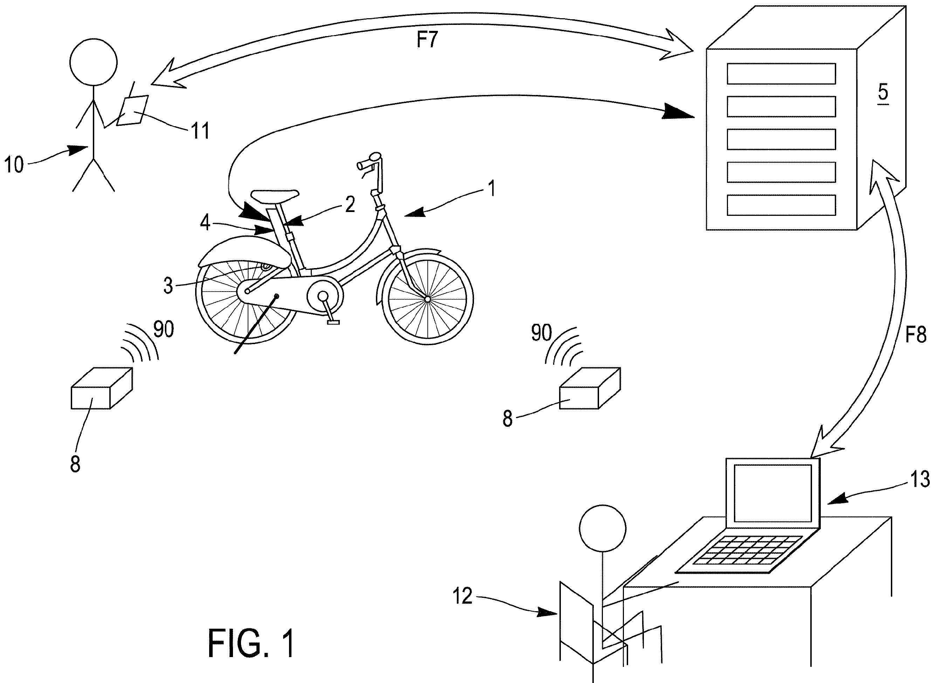

Dans le cadre du mode de réalisation présenté, le système conforme à l'invention comporte plusieurs véhicules 1 et les véhicules 1 sont des bicyclettes électriques. Afin de faciliter la lecture des figures et la compréhension de l'invention, une seule bicyclette a été représentée sur la figure 1. Il devra toutefois être entendu que l'invention peut s'appliquer à d'autre véhicules, par exemple une bicyclette non motorisée ou une trottinette (électrique ou non).

Le véhicule 1 comporte, de façon classique, une batterie de véhicule, une béquille et un moteur électrique.

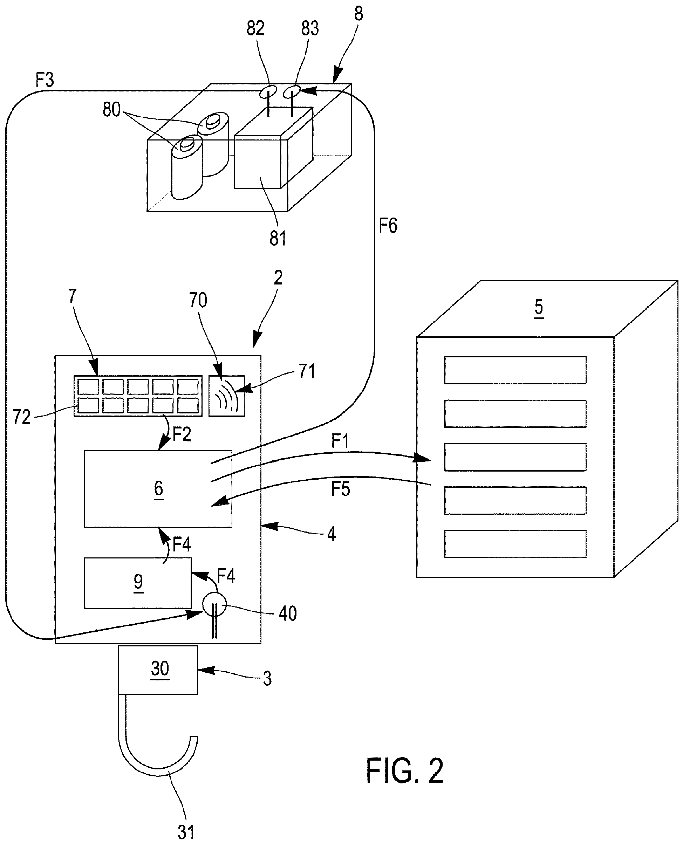

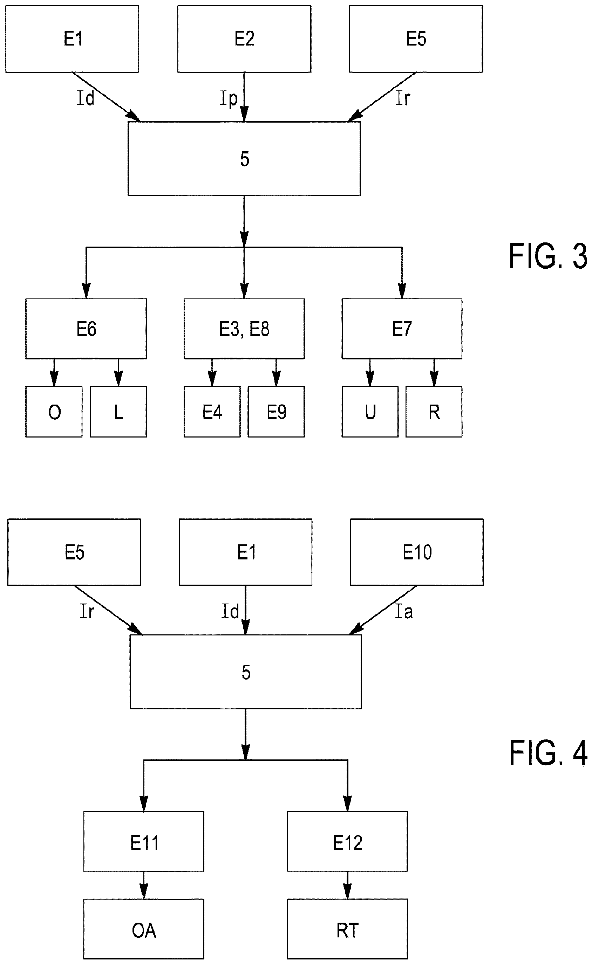

Chaque véhicule 1 du système conforme à l'invention est équipé d'un dispositif antivol 2, plus particulièrement représenté en figures 2 et 3 de façon schématique.

Le dispositif antivol 2 conforme à l'invention peut être réalisé de deux façons : il peut être réalisé en un seul et même dispositif compact, ce qui facilite l'installation et la maintenance de ce dispositif antivol, limite son poids, réduit les interfaces de câblage et sécurise les communications.

Le dispositif antivol peut également être réalisé en deux parties reliées ensemble : c'est le mode de réalisation qui a été retenu dans cette présentation. La conception en deux parties permet de pouvoir équiper les véhicules en partage existants, pourvus d'un système de verrouillage 3. Le dispositif antivol 2 réalisé en deux parties comporte donc un système de verrouillage 3, apte à verrouiller le véhicule 1 quand il n'est pas utilisé, ainsi qu'un module de connectivité 4 qui est relié au système de verrouillage 3.

Le système de verrouillage 3 est en système classique en soi, qui peut donc être un système existant : par exemple, il peut comporter un boitier 30 dans lequel se trouve un mécanisme de serrure (non illustré) et un anneau (souvent métallique) 31 qui peut être ouvert ou fermé. Dans le cadre de l'exemple de réalisation de l'invention, le mécanisme du boitier 30 est commandé par le module de connectivité 4.

Le système de verrouillage 3 peut ainsi être actionné entre différentes positions : une première position ouverte (appelée également par la suite « inhibée ») suivant laquelle le véhicule est utilisable car il n'est pas verrouillé - il s'agit de la position suivant laquelle l'anneau 31 est ouvert.

Le système de verrouillage peut également se trouver dans une seconde position dite « de verrouillage », suivant laquelle l'anneau 31 est fermé.

La seconde position de verrouillage peut être réalisée de deux façons avec l'anneau fermé : on peut prévoir de maintenir l'anneau mécaniquement en position fermée, sans autre action du module de connectivité : cette position de verrouillage sera nommée « seconde position de verrouillage intermédiaire ».

On peut également prévoir de maintenir l'anneau 31 mécaniquement en position fermée et de couper l'alimentation électrique du véhicule grâce au module de connectivité 4 relié au système de verrouillage 3 : dans ce cas, la position verrouillée sera appelée « troisième position de verrouillage final ». Dans cette troisième position de verrouillage final le véhicule 1 est verrouillé mécaniquement et électriquement.

On comprend ainsi que le module de connectivité 4 permet notamment de contrôler de système de verrouillage 3 et l'alimentation en énergie du véhicule.

Le module de connectivité 4 gère toutes les communications avec un serveur distant 5.

Conformément à l'invention, le module de connectivité 4 comporte un équipement de communication 6, apte à communiquer avec le serveur distant 5 (flèche F1 sur la figure 2), ainsi qu'un module d'identification 7 d'un usager 10, le module d'identification 7 communiquant avec ledit équipement de communication 6 (flèche F2 sur la figure 2).

Le module d'identification 7 d'un usager 10 peut comporter plusieurs éléments d'identification : il peut s'agir d'un lecteur d'identifiant RFID 70, d'un lecteur NFC 71, et/ ou d'un clavier numérique 72 sur lequel l'usager 10 peut taper un code correspondant à son numéro d'abonné, par exemple.

On prévoit que le module de connectivité 4 comporte au moins un clavier numérique 72, de sorte que l'usager puisse s'identifier même sans son appareil mobile 11 (téléphone mobile perdu, volé, déchargé...).

On notera que le système conforme à l'invention ne comporte pas de bornes traditionnelles sur lesquelles l'utilisateur doit s'identifier : c'est le dispositif antivol qui permet à l'utilisateur de s'identifier au serveur distant 5 pour pouvoir bénéficier du service.

Conformément à l'invention, dans le cadre de cet exemple, le système comporte deux balises 8 (donc au moins une) qui permettent de définir une zone géographique dans laquelle l'utilisateur 10 obtient une mise à disposition d'un véhicule et dans laquelle il doit restituer le véhicule dont il veut arrêter le service. Cette zone géographique définie par les balises 8 définit un parc de stationnement pour les véhicules 1.

Il est à noter que les balises 8 sont alimentées en énergie grâce à au moins une batterie 80 que chacune comporte (voir figure 2) : il n'est donc pas nécessaire de prévoir une alimentation électrique qui changerait l'environnement urbain dans lequel le système est mis en oeuvre.

De plus, les balises 8 sont des objets qui présentent une petite taille, que l'on peut saisir manuellement et déplacer aisément. On comprendra par « petite taille » une taille dont l'encombrement est compris dans une sphère dont le rayon n'excède pas 30 mm.

Les balises 8 peuvent donc être facilement cachées dans l'environnement urbain, sans en changer la perception par les citadins.

Il devra être compris que l'invention ne se limite pas à la mise en oeuvre de deux balises 8 : le système pourrait une seule balise 8 ou plus de deux balises 8 sans sortir du cadre de l'invention.

Par ailleurs, la position des balises 8 ne définit pas les bornes de la zone géographique de mise à disposition ou de restitution des véhicules 1 : en effet, les balises 8 permettent de définir une station virtuelle sans infrastructure dans laquelle l'usager 10 a l'obligation de rendre le véhicule et de le garer de manière précise, avec une précision mesurable.

La zone géographique est délimitée par un certain nombre de balises disposées les unes par rapport aux autres de manière à calculer des coordonnées précises du dispositif antivol du véhicule, pour connaître la localisation du véhicule 1 par rapport aux coordonnées géographiques de la zone géographique.

Pour permettre cela, chacune des balises 8 comporte un module de communication 81 équipé d'un émetteur 82 apte à transmettre des ondes radio 90 (voir figure 1) et chaque dispositif antivol 2 comporte un récepteur 40 d'ondes radio apte à recevoir les ondes radio émises par les balises 8 (voir flèche F3 en figure 2). Les ondes radio 90 émises comportent des informations comme l'identifiant de la balise 8 et quelques données. Notons que l'identifiant de la balise est suffisant pour retrouver les caractéristiques de la balise en base de données, mais pour un gain de temps, certaines données peuvent être dupliquées dans la balise, par exemple le numéro de station, les coordonnées de position d'origine etc.

Le récepteur 40 de chaque dispositif antivol 2 fonctionne en RSSI (Received Signal Strength Indication) ce qui permet d'identifier l'intensité des ondes reçues.

Le dispositif antivol comporte également un module de traitement 9 qui permet de traiter l'information sur l'intensité des ondes perçues (voir flèches F4 sur la figure 2) de manière à déterminer la position de la balise 8 par rapport au dispositif antivol 2, ou inversement (et donc par rapport au véhicule 1).

La technologie de ces balises 8 et la mesure de la position par ondes radio permet de calibrer à souhait la précision de la définition de la zone de stationnement virtuel et de s'affranchir de la dépendance de fonctionnement et de la précision toute relative des systèmes disponibles sur le marché, comme les systèmes GPS, déclaratifs sur smartphones etc.

L'information de position (ou de distance) déterminée par le module de traitement 9 peut être transmise par l'équipement de communication 6 du dispositif antivol 2 au serveur distant 5.

C'est ainsi que le serveur distant 5 peut savoir si le véhicule 1 est situé dans la zone géographique du parc de stationnement ou non et qu'il peut transmettre un signal (flèche F5 sur la figure 2) au dispositif antivol, ce signal ayant pour conséquence de déclencher la mise à disposition du véhicule 1 ou d'autoriser la restitution du véhicule 1, en agissant sur le fonctionnement du système de verrouillage 3 du dispositif antivol 2 notamment.

Pour permettre la communication à bas débit et par radio, l'équipement de communication 6 du dispositif antivol 2 fonctionne suivant un protocole sans fils basse consommation type LoRa Wan et par Bluetooth Low Energie. Les balises 8 communiquent également grâce au Bluetooth Low Energie.

Le fonctionnement par Bluetooth Low Energie permet un fonctionnement du système conforme à l'invention même en absence de réseau de télécommunication, entre le dispositif antivol 2 et les balises 8.

Concernant les balises 8, elles peuvent également offrir d'autres fonctions comme par exemple, celle de permettre des fonctions de tracking et de stockage d'informations (par exemple des informations concernant la typologie de la station dont elles définissent la zone géographique).

Pour ce faire, dans le cadre de ce mode de réalisation, les modules de communication 81 des balises 8 comportent également un récepteur 83, apte à recevoir des ondes radio (flèche F6) en provenance de l'équipement de communication 6 du dispositif antivol, comportant des informations relatives au véhicule 1. De plus, le module de communication 80 est associé à un module de traitement logique des informations en provenance des dispositifs antivol 2.

Conformément à l'invention, le système peut également comporter un appareil mobile 11, par exemple le téléphone mobile de l'usager 10, qui peut mettre en oeuvre une application mobile usager dédiée au système.

L'application mobile est gérée par le serveur distant 5 qui met à jour toutes les informations relatives à l'usager et au véhicule 1 en service, associé à l'usager (voir flèche F7 sur la figure 1).

L'application mobile offre une interface à l'utilisateur qui transmet des informations relatives au niveau de batterie du véhicule 1 mis en service, à sa position géographique, à l'état du véhicule (« libre » L, « occupé » O ou « occupé et à l'arrêt » OA) ou encore sur les trajets réalisés avec le véhicule, de manière que l'usager 10 ait un historique de ses trajets.

Ces informations permettent à l'usager de connaitre en temps réel les informations propres à son véhicule et de prendre les décisions appropriées pour son usage ou sa restitution (notamment au regard du niveau de la batterie).

L'application mise en oeuvre sur l'appareil mobile 11 peut également comporter un outil d'identification, par exemple un identifiant visuel attribué à l'utilisateur qui soit lisible par le lecteur d'identifiant RFID 70 ou NFC 71 du dispositif antivol 2 : ainsi, l'usager 10 peut utiliser l'application mise en oeuvre sur son appareil mobile 11 pour s'identifier sur un dispositif antivol 2 d'un véhicule 1.

Par ailleurs, le système conforme à l'invention peut également comporter d'autres appareils distants servant d'interface à un exploitant 12 du parc de stationnement des véhicules 1 en partage du système. Ces autres appareils sont symboliquement représentés par un ordinateur 13 sur la figure 1 (interface homme 12 / serveur 5).

L'interface 13 est gérée par le serveur distant 5 (voir flèche F8 sur la figure
1) qui délivre des informations à l'exploitant 12 telles que :
   - Un inventaire des véhicules en partage, y compris ceux disponibles dans la zone géographique du parc de stationnement,
   - Pour chaque véhicule, une information sur son niveau de batterie, son état, un historique de ses trajets,
   - Si le véhicule en partage est en état de mise en service, une information sur l'usager 10 qui utilise le véhicule.

L'interface 13 indique également à l'exploitant 12 tous les véhicules dont la batterie serait à un niveau de charge inférieur à un niveau de charge prédéterminé.

L'interface 13 indique également à l'exploitant 12 tous les véhicules se trouvant en dehors du parc de stationnement, c'est-à-dire en dehors de la zone géographique définie par les balises 8.

L'interface exploitant 13 peut également permettre certaines fonctions pour l'exploitant 12 : notamment, elle peut comporter un module de commande, actionnable par l'exploitant, pour réaliser ou forcer certaines fonctions du dispositif antivol 2 d'un véhicule 1. Par exemple, le module de commande de l'interface 13 peut permettre à l'exploitant 12 de déclencher un changement de position du système de verrouillage 3 (passage de la position inhibée à une position de verrouillage final ou inversement): pour ce faire, l'exploitant 12 envoie des instructions au serveur distant 5 via l'interface 13 (fonction de commande sur l'interface).

Il va maintenant être fait référence à un procédé de mise en oeuvre du système conforme à l'invention en faisant notamment référence aux figures 3 et 4.

On considère que la station virtuelle, correspondant à une zone géographique dont les limites sont fixées par la mise en oeuvre des balises 8, comporte plusieurs véhicules 1 équipés chacun d'un dispositif antivol 2. Chaque dispositif antivol 2 comporte un système de verrouillage qui se trouve en position de verrouillage final et les véhicules sont disponibles pour être empruntés par un usager en règle.

Pour la mise à disposition d'un véhicule 1, un usager 10 commence par s'identifier sur le module d'identification 7 du dispositif antivol 2 : pour cela, soit il entre un code qui lui est propre sur le clavier numérique, soit il s'identifie avec son appareil portable 11 en utilisant l'application dédiée (étape E1 schématisée en figure 3).

En réalisant cette étape, une information Id d'identification d'usager est générée par le module de connectivité 4 et transmise, par l'équipement de communication 6 au serveur distant 5.

En parallèle, le module de connectivité 4 réalise un balayage radio d'une zone autour du véhicule 1 auquel il est associé, de manière à détecter (ou non) un signal radio émis par une balise 8 (étape E2 en figure 3).

Si le récepteur d'ondes radio 40 détecte un signal radio (ou ondes radio) 90 de balise 8, le module de traitement 9 génère une information de position Ip du véhicule (ou du dispositif antivol) par rapport à une balise identifiée et l'équipement de communication transmet au serveur distant l'information de position Ip.

Le serveur distant 5 reçoit ainsi une information d'identification d'usager Id et une information de position Ip.

Le serveur vérifie si l'usager est répertorié parmi les usagers inscrits pour le service.

Si le serveur n'arrive pas à identifier l'usager 10, alors le serveur distant 5 commande le maintien du système de verrouillage 3 en position de verrouillage final et le véhicule 1 reste disponible pour une autre personne dans le parc de stationnement virtuel.

En revanche, si le serveur distant 5 identifie l'usager 10 et reçoit l'information suivant laquelle le véhicule est bien dans la zone géographique du parc de stationnement virtuel, alors le serveur 5 transmet au dispositif antivol 2 un signal d'autorisation de mise à disposition (ou mise en service - étape E3) qui conduit à la commande du passage du système de verrouillage 3 de la position verrouillée finale à une position inhibée (E4).

Plus précisément, le signal d'autorisation est reçu par l'équipement de communication 6, qui le transmet au module de traitement 9. Le module de traitement 9 traite ce signal et commande le changement d'état du système de verrouillage (passage de la position de verrouillage final à la position inhibée/ouverte).

Si, en position de verrouillage final, le véhicule 1 était également mis hors tension électrique, le signal d'autorisation de mise à disposition reçu par le dispositif antivol commanderait également la mise sous tension électrique du véhicule 1.

Simultanément à la transmission du signal d'autorisation de mise à disposition, le serveur 5 enregistre le changement d'état du véhicule suivant une étape E6 : le véhicule passe en état occupé O.

De plus, le serveur 5 enregistre le changement d'état pour l'usager suivant une étape E7 : l'usager passe en état d'utilisation U.

Durant toute la durée de l'utilisation du véhicule 1 par l'usager, le dispositif antivol transmet en permanence le niveau de batterie du véhicule au serveur distant 5 qui met à jour en permanence les informations relatives au niveau de batterie du véhicule 1 en service sur l'application de l'usager 10.

Pour restituer le véhicule 1 et arrêter le service, l'usager 10 actionne manuellement le système de verrouillage 3 du dispositif antivol 2 (étape E5 sur la figure 3) : la fermeture manuelle fait un contact électrique ou actionne un capteur qui déclenche la transmission d'un signal de demande de restitution comprenant une information de demande de restitution Ir.

L'information de demande de restitution Ir est transmise via le signal de demande de restitution au serveur distant 5 par l'équipement de communication 6 du dispositif antivol 2.

Le système de verrouillage ayant été manuellement actionné, il se trouve dans une position verrouillée temporaire.

Le signal Ir de demande de restitution est reçu par le serveur distant 5, et traité par ce dernier.

Le serveur distant 5 identifie alors l'usager grâce à l'identifiant Id associé au véhicule 1 d'où provient le signal Ir.

Le signal Ir de demande de restitution comporte également une information sur le véhicule qui a généré ce signal Ir.

Parallèlement à la transmission du signal de demande de restitution Ir, le dispositif de connectivité effectue un balayage d'une zone géographique autour du véhicule pour tenter de capter un signal radio d'une balise 8.

La figure 3 montre les étapes qui sont réalisées par le procédé si une balise est détectée.

Si une balise est détectée par le récepteur d'ondes radio 40, une information de position Ip est générée et transmise au serveur distant 5.

Le serveur distant reconnait alors que le véhicule 1 se trouve dans une zone où il peut être restitué et où le service de mise à disposition peut être arrêté.

Alors, le serveur distant 5 génère une information d'état de restitution du véhicule (Etape E8) en direction du véhicule, qui déclenche le passage du système de verrouillage de la position verrouillée temporaire à la position verrouillée finale (Etape E9) : le véhicule est mécaniquement verrouillé et l'alimentation électrique du véhicule est coupée.

Plus exactement, le serveur distant 5 transmet en direction de l'équipement de communication du dispositif antivol le signal d'autorisation de restitution.

Ce signal est reçu par l'équipement de communication 6 et traité par le mode de traitement 9 qui déclenche le passage du système de verrouillage à sa position de verrouillage final.

Parallèlement à l'envoi du signal d'autorisation de restitution E8, le serveur distant 5 enregistre l'état du véhicule (état libre L sur la figure 3), et change l'état de l'usager suivant l'étape E7 en le faisant passé de l'état « en usage » U à l'état « restitué » R.

Si toutefois, en effectuant une demande de restitution, l'usager ne se trouvait pas dans une zone où la restitution était possible, alors les étapes suivantes se produiraient.

La figure 4 illustre une telle situation.

L'usager a actionné le système de verrouillage manuel : les étapes E5 et E1 ont été réalisées : le serveur distant 5 a donc été informé d'une volonté de restitution (Ir) et de l'identité (Id) de l'usager souhaitant restituer le véhicule 1. Néanmoins, le balayage radio réalisé par le module de connectivité n'a pas réussi à détecter un signal radio émis par une balise 8 : alors, le module de connectivité génère un signal qui comporte un message d'absence de détection de balise, ou information « la » (étape E10), qu'il transmet au serveur distant 5.

Le serveur distant reçoit et traite l'information « la » en générant une information d'état de restitution temporaire.

Cette information d'état de restitution temporaire a deux conséquences : suivant une étape E11, le serveur distant 5 met à jour l'état du véhicule qui passe de l'état occupé O à l'état « occupé et à l'arrêt » OA. Le véhicule n'est donc pas restitué et il n'est pas libre pour un autre usager.

Par ailleurs, suivant une étape E12, le serveur distant 5 change l'état de l'usager qui passe d'un état « en usage » U à l'état « restitution temporaire » RT.

Cet état de l'usager permet, par exemple, de prévenir l'usager 10 (via l'application sur son appareil mobile 11) que le service de mise à disposition est encore en cours.

Ainsi, si cette restitution temporaire n'est pas volontaire de la part de l'usager, celui-ci dispose d'un moyen pour être informé de la situation. Il peut alors se servir de l'application pour trouver une zone où il pourra réaliser une restitution valable, ou éventuellement appeler l'exploitant pour trouver avec lui une solution à ce problème.

On comprend de ce qui précède comme l'invention permet à un exploitant de s'assurer que les véhicules soient restitués dans des zones précises où les véhicules ne pourront pas être privatisés.

On comprend également de la description qui précède comment l'invention permet de créer des zones géographiques de restitution sans toutefois nuire à l'environnement (sans réaliser des bornes qui défigurent le paysage urbain).

La description qui précède montre un mode de réalisation du système et du procédé conforme à l'invention : il devra toutefois être entendu que l'invention n'est pas limitée spécifiquement à ce système et à ce procédé et qu'elle pourrait s'étendre à la mise en oeuvre de tout moyen équivalent (plus de véhicules, plusieurs exploitants...)

## Revendications

1. Système pour gérer la zone précise de mise à disposition de véhicules (1), en partage ou la restitution desdites véhicules, sur un territoire donné, maillé par un nombre d'antennes passerelles assurant la communication entre un serveur distant (5) et un dispositif antivol (2), à fixer sur un véhicule (1), ledit dispositif antivol (2) comportant :
- un système de verrouillage (3) du véhicule (1), pour empêcher l'utilisation du véhicule (1), actionnable entre une première position inhibée suivant laquelle le véhicule (1) n'est pas verrouillé et utilisable, une seconde position de verrouillage temporaire suivant laquelle le véhicule (1) est verrouillé mécaniquement et éventuellement une troisième position de verrouillage final suivant laquelle le véhicule (1) est verrouillé mécaniquement et électriquement,
- un module de connectivité (4) comprenant :
a) un équipement de communication (6), apte à communiquer avec ledit serveur distant (5),
b) un module d'identification (7) d'un usager (10) qui communique avec ledit équipement de communication (6),
**caractérisé en ce que** ledit système comporte au moins une balise (8) définissant une zone géographique d'un parc de stationnement pour lesdits véhicules, ladite au moins une balise (8) comprenant au moins une batterie (80) et un module de communication (81), apte à transmettre des ondes radio (90),
**et en ce que** ledit dispositif antivol (2) comporte :
- un récepteur d'ondes radio (40), apte à recevoir les ondes radio (90) émises par ladite au moins une balise (8) en RSSI et apte à délivrer au moins une information d'intensité desdites ondes radio (90) reçues de ladite au moins une balise (8), et
- un module de traitement (9) de ladite information d'intensité, pour générer une information de position (Ip) du dispositif antivol (2) par rapport à ladite balise (8) émettrice desdites ondes radio (90),
ledit équipement de communication (6) dudit dispositif antivol (2) étant apte à transmettre audit serveur distant (5) ladite information de position (Ip) générée et à recevoir, en retour du serveur distant (5), un signal (F5) autorisant ou non la mise à disposition du véhicule (1) ou une restitution dudit véhicule (1) .

2. Système selon la revendication 1, **caractérisé en ce que** ledit équipement de communication (6) transmet ladite information de position (Ip) suivant un protocole de communication permettant la communication par radio d'objets à faible consommation électrique et connectés via des passerelles, participant ainsi à l'Internet des objets.

3. Système selon l'une quelconque des revendications 1 ou 2, **caractérisé en ce que** ledit module de communication (81) d'ondes radio de ladite au moins une balise (8) comporte en outre un récepteur (83) d'ondes radio comportant des informations relatives audit dispositif antivol (2) d'un véhicule (1),
**et en ce que** ladite au moins une balise (8) comporte un module de traitement logique desdites informations relatives audit dispositif antivol (2).

4. Système selon l'une quelconque des revendications précédentes, **caractérisé en ce que** ledit module de communication (81) de ladite au moins une balise et le récepteur d'ondes radio (40) dudit dispositif antivol (2) fonctionnent suivant la technologie Bluetooth.

5. Système selon l'une quelconque des revendications précédentes, **caractérisé en ce que** le dispositif antivol (2) comporte un module GPS.

6. Système selon l'une quelconque des revendications précédentes, **caractérisé en ce que** le dispositif antivol (2) comporte deux éléments (3, 4) qui s'assemblent parmi lesquels un premier élément comportant ledit système antivol (3) et un second élément comportant ledit module de connectivité (4), ledit récepteur d'ondes radio (40) et ledit module de traitement (9).

7. Système selon l'une quelconque des revendications précédentes, **caractérisé en ce qu'**il comporte des véhicules (1), chacun des véhicules (1) étant équipé d'un dispositif antivol (2).

8. Système selon l'une quelconque des revendications précédentes, **caractérisé en ce qu'**il comporte un appareil mobile (11) dudit usager (10) mettant en oeuvre une application mobile usager dédiée audit système, ladite application étant gérée par ledit serveur distant (5) et transmettant des informations d'usager audit usager parmi lesquelles :
- une information relative à un niveau de batterie du véhicule (1),
- une information relative à la position géographique du véhicule (1),
- une information sur un état de verrouillage dudit système de verrouillage (3) du véhicule (1),
- un historique des trajets réalisés avec ledit véhicule (1).

9. Système selon la revendication 8 **caractérisé en ce que** ladite application comporte un outil d'identification permettant à l'usager de s'identifier sur le dispositif antivol (2) au moyen de son appareil mobile (11).

10. Système selon l'une quelconque des revendications précédentes, **caractérisé en ce qu'**il comporte une interface exploitant (13) gérée par ledit serveur distant (5), ladite interface exploitant (13) délivrant des informations d'exploitant à un exploitant (12) parmi lesquelles :
- un inventaire des véhicules (1) en partage,
- des informations propres à chacun des véhicules (1),
- une première indication sur au moins un véhicule (1) dont le niveau de batterie est inférieur à un seuil de niveau de batterie prédéterminé,
- une seconde indication sur au moins un véhicule (1) se trouvant en dehors desdites bornes géographique dudit parc de stationnement.

11. Système selon la revendication 10, **caractérisé en ce que** l'interface exploitant comporte un module de commande du système de verrouillage (3) du véhicule (1) par l'exploitant (12), ledit module de commande étant apte à déclencher un changement de position du système de verrouillage (3) sur instruction de l'exploitant (12).

12. Procédé de gestion pour la mise en oeuvre du système selon l'une quelconque des revendications précédentes, **caractérisé en ce qu'**il comporte les étapes suivantes pour la mise à disposition d'un véhicule (1) :
- identification (Id) dudit usager (10) au moyen dudit module d'identification (7) dudit dispositif antivol (2) équipant un véhicule (1) et transmission (E1) au serveur distant (5) de l'identification (Id) dudit usager par ledit équipement de communication (6),
- éventuel balayage radio d'une zone géographique prédéterminée autour dudit véhicule, par ledit module de connectivité dudit dispositif antivol,
- détection éventuelle, par ledit récepteur d'ondes radio, d'un signal radio émis par au moins une balise, et
- délivrance éventuelle, par le module de traitement, d'une information de position (Ip) relative dudit dispositif antivol (2) par rapport à ladite au moins une balise (8),
- transmission éventuelle (E2) de ladite information de position (Ip) par ledit équipement de communication (6) au serveur distant (5),
- réception de ladite information d'usager (Id) et éventuelle réception de ladite information de position par ledit serveur distant (5),
- génération (E3) d'un signal d'autorisation de mise à disposition par le serveur distant (5), en direction de l'équipement de communication (6) dudit dispositif antivol (2),
- réception du signal d'autorisation de mise à disposition par ledit équipement de communication (6),
- traitement dudit signal d'autorisation de mise à disposition par ledit module de traitement (9) du dispositif antivol (2),
- déclenchement (E4) du passage du système de verrouillage de sa position verrouillée finale à sa position inhibée.

13. Procédé selon la revendication 12, **caractérisé en ce qu'**il comporte les étapes suivantes pour la restitution finale d'un véhicule :
- actionnement manuel (E5) du système de verrouillage (3) du véhicule (1) par l'usager (10), déclenchant la transmission d'un signal (Ir) de demande de restitution par ledit équipement de communication (6) audit serveur distant (5) ainsi que le passage du système de verrouillage de sa position inhibée (O) à sa position verrouillée temporaire (OA),
- réception dudit signal (Ir) de demande de restitution par ledit serveur distant (5) qui identifie (Id) alors ledit usager (10) et ledit véhicule (1),
- balayage radio d'une zone géographique prédéterminée autour dudit véhicule (1), par ledit module de connectivité (4) dudit dispositif antivol (2),
- détection, par ledit récepteur d'ondes radio (40), d'un signal radio (90) émis par une balise (8),
- délivrance, par le module de traitement (9), d'une information de position (Ip) relative dudit dispositif antivol par rapport à ladite au moins une balise,
- transmission (E2) de ladite information de position (Ip) par ledit équipement de communication (6) en direction du serveur distant (5),
- réception de ladite information de position (Ip) et dudit signal de demande de restitution (Ir) par ledit serveur distant (5),
- traitement de ladite information de position (Ip) par ledit serveur distant (5) et génération (E8) d'une information d'état de restitution du véhicule (1),
- transmission par le serveur distant (5) d'un signal d'autorisation de restitution, en direction de l'équipement de communication (6) dudit dispositif antivol (2),
- réception du signal d'autorisation de restitution par ledit équipement de communication (6),
- traitement dudit signal d'autorisation de restitution par ledit module de traitement (9) du dispositif antivol (2),
- déclenchement (E9) du passage du système de verrouillage (3) de sa position verrouillée temporaire (OA) à sa position verrouillée finale (L).

14. Procédé selon la revendication 11 ou 12, **caractérisé en ce qu'**il comporte les étapes suivantes pour la restitution temporaire d'un véhicule :
- actionnement manuelle (E5) du système de verrouillage (3) du véhicule (1) par l'usager (10), déclenchant la transmission d'un signal de demande de restitution (Ir) audit serveur distant (5) ainsi que le passage du système de verrouillage (3) de sa position inhibée (O) à sa position verrouillée temporaire (OA),
- réception dudit signal de demande de restitution (Ir) par ledit serveur distant (5) qui identifie (Id) alors ledit usager (10) et ledit véhicule (1),
- balayage radio d'une zone géographique prédéterminée autour dudit véhicule (1), par ledit module de connectivité (4) dudit dispositif antivol (2),
- constatation par ledit module de connectivité (4) d'une absence de détection d'un signal radio émis par une balise (9),
- transmission par ledit équipement de communication (6) au serveur distant (5) d'une information d'absence de position définie (la),
- réception de ladite information d'absence de position définie (la) par ledit serveur distant (5),
- traitement de ladite information d'absence de position définie (la) par ledit serveur distant (5) et génération (E11, E12) d'une information d'état de restitution temporaire du véhicule.

15. Procédé selon l'une quelconque des revendications 11 à 13, **caractérisé en ce que** si l'usager (10) n'est pas reconnu par le serveur distant (5), alors le serveur distant (5) commande le maintien du système de verrouillage (3) du véhicule (1) en position de verrouillage final (L).
